# EUROPEAN PATENT SPECIFICATION

(11) **EP 1 855 197 B1**
(45) Date of publication and mention of the grant of the patent: **19.12.2012**
(21) Application number: 06113776.6
(22) Date of filing: 10.05.2006
(51) Int. Cl.: G06F 9/445

(54) **Method and system for incremental patching of binary files**
Verfahren und System zum inkrementellen Aktualisieren von Binärdateien
Système et procédé pour fournir des corrections incrementielles de fichiers binaires

(43) Date of publication of application: 14.11.2007
(73) Proprietor: Research In Motion Limited, Waterloo, ON N2L 3W8 (CA)
(72) Inventor: Dahms, John F.A., Waterloo Ontario N2K 2N1 (CA); Scian, Anthony F., Waterloo Ontario N2T 2N6 (CA)
(74) Representative: Patel, Binesh

(56) References cited:
- WO-A1-2005/101200
- WO-A2-2004/114130
- US-A- 6 018 747
- US-B2- 6 775 423

## Description

The present application relates to methods for performing software updates and, in particular, performing incremental patching of binary files.

A common practice in the computer software industry is to update binary code by way of a patch. Application of a patch to existing binary code results in updated binary code. In its simplest form, a patch is a set of commands for creating the updated binary code using the existing binary code. For example, the patch may include a set of copy and insert commands. A copy command includes a reference to a section of the existing binary code that matches a section of the updated binary code. The copy command is useful when a portion of the updated binary code can be obtained from the existing binary code. An insert command provides data to be inserted in the updated binary code. The insert command is used to create portions of the updated binary code that cannot be found in the existing binary code.

In practice, the "copy" command in a patch rarely involves copying an exact portion of the existing binary code for inclusion in the updated binary code. Usually, the "copied" portion of the existing binary code is similar, but not exactly the same, as the desired portion of updated binary code. Accordingly, the patch may also include an associated difference file. The copy command is used to indicate that a portion of the updated binary code is *similar* to the existing binary code, and the associated difference file contains the byte-wise differences. Each copy command may specify an offset in the existing binary code and a length. The specified portion of the existing binary code is read and added to the same number of bytes from the associated difference file to create the desired portion of the updated binary code.

The conventional method of patching a binary image is to create a backup of the old image, generate a new image by applying the patch to the old image, and then overwrite the old image with the newly generated image once it has been completed. This approach requires a substantial amount of free memory space, which may not be available in memory-scarce environments, such as mobile electronic devices.

One option for conserving memory space is to apply the patch incrementally to the existing binary image in memory, overwriting portions of the image as the patch executes. This option can produce viable patches but the incremental overwriting of the old portions of the image can result in a patch that must inject (rather than copy) substantial portions of the new image. Because the patch is implemented incrementally, the old image is incrementally overwritten, meaning that old sections of the image are not available for copying into the new image. The reduced amount of data available for copying may result in a larger patch.

US-B-6018747 discloses a method of in-place patching to update a binary image. An in-place reconstructible delta file is generated on a source computer and reconstructed on a target computer. The disclosure suggests that after the delta file is created, one may attempt to detect conflicts within the delta file by generating a digraph. Reconstruction of the delta file then takes place by rearranging the order in which copy commands are applied in order to minimize the number of write-before-read conflicts. If a write-before-read conflict cannot be eliminated, it is suggested that the copy command should be converted to an add command.

Alternative methods of resolving write-before-read conflicts are discussed in US-B-6775423 and WO-A-2005/101200.

Accordingly, it would be advantageous to provide a method and system for generating an incremental patch that improves the amount of reuse of data that will be available during the patching process. It would also be advantageous to provide a method and device for incrementally patching a binary image.

The present application preferably describes and discloses a method, system, and machine-readable medium for generating an incremental patch to update an old binary image. The present application further describes and discloses a method, mobile electronic device and machine-readable medium for incrementally patching an old binary image to create a new binary image.

An incremental patch is preferably generated as a series of delta files or sector-specific patches, intended to be applied incrementally to the old binary image. Each sector-specific patch contains the commands for generating one sector of a new binary image. Each sector-specific patch may take into account changes to the binary image made by previous patches in the series since the image memory will contain a mixture of the old image and the new image at each incremental step of the patch process. The observation that the current image will often have useful information that can be referenced by a binary patch allows this method to produce smaller patches than systems that only refer to the old image. The sector-specific patches may be generated by applying a binary difference algorithm to the then-current partially patched image, until each sector has a corresponding delta file.

In some embodiments, the sector-specific patches may be generated in an order that takes into account the relative contributions of the sectors to generating the new binary image. In particular, the order in which sectors are patched may be based on first overwriting those sectors making the least contribution of data to generation of the new binary image.

In one aspect, the present application preferably provides a method of generating an incremental patch for updating an old binary image to a new binary image, the new binary image being divided into a plurality of sectors, wherein the method comprises the steps of: initially establishing a current image as the old binary image; selecting one of the plurality of sectors of the new binary image; computing a binary difference algorithm to generate a delta file for obtaining data for said one of the plurality of sectors from the current image, the delta file being generated based upon the whole of the current binary image and the selected sector of the new binary image; applying the delta file to the current image to create a new current image; and repeating the steps of selecting, computing and applying for each of the plurality of sectors, wherein the incremental patch comprises a plurality of delta files created from the computing steps.

In another aspect, the present application preferably provides a system for generating an incremental patch for updating an old binary image to a new binary image, the new binary image being divided into a plurality of sectors, the system comprising: memory for storing the new binary image and the old binary image, and for storing a current image, wherein said current image is initially established as the old binary image; a processor; a patch generation module executable by the processor for generating the incremental patch, the patch generation module comprising a component for selecting one of the plurality of sectors, computing a binary difference algorithm to generate a delta file for obtaining data for one of the plurality of sectors from the current image the delta file being generated based upon the whole of the current binary image and the selected sector of the new binary image, and a component for applying the delta file to the current image to create a new current image, and wherein said patch generation module comprises a loop component for invoking said components for selecting, computing and applying for each of the plurality of sectors, wherein the incremental patch comprises a plurality of the delta files created by said component for computing under control of said loop component.

The present application also preferably provides a machine-readable medium storing program instructions for executing any of the methods described herein within any of the system or devices described herein, as the case may be.

### BRIEF DESCRIPTION OF THE DRAWINGS

Reference will now be made, by way of example, to the accompanying drawings which show example embodiments of the present application, and in which:

Figure 1 shows a block diagram of a known method of producing a patch for generating a new binary image from an old binary image;

Figure 2 diagrammatically shows the old binary image and the new binary image;

Figures 3A - 3D illustrate, in block diagram form, the generation of an incremental patch in accordance with an embodiment of the present application;

Figure 4 shows, in flowchart form, a method for generating an incremental patch for updating an old binary image to a new binary image;

Figure 5 shows, in flowchart form, another method of generating an incremental patch for updating an old binary image to a new binary image;

Figure 6 shows, in flowchart form, a method of incrementally patching a binary image; and

Figure 7 shows, in block diagram form, a system and device for generating and applying an incremental patch.

Similar reference numerals may have been used in different figures to denote similar components.

### DESCRIPTION OF PREFERRED EMBODIMENTS

Embodiments of the present application are not limited to any particular operating system, mobile device architecture, server architecture, or computer programming language.

References in the present application to "blocks" or "sectors" of an image or of memory are intended to refer to portions or blocks of memory space having a predefined size. In the case of flash memory, or other similar types of writable memory, a block or sector refers to that sub-portion of the memory that can be written at one time.

While the present application describes embodiments that are of use in patching code resident in flash memory, the present application is not limited to patching binary data in flash memory and may be implemented in connection with other types of memory. It will also be understood that, although the present application provides some examples of methods for choosing the permutation of sectors to use in generating the incremental patches, the present application is not limited to these methods.

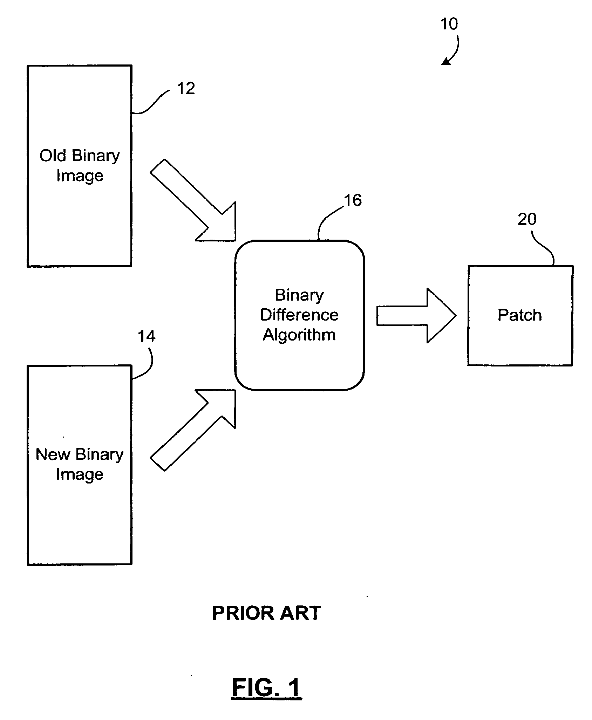

Reference is first made to Figure 1, which shows a block diagram of a known method 10 of producing a patch 20 for generating a new binary image 14 from an old binary image 12. A binary difference algorithm 16 is used to produce the patch 20 based upon the old binary image 12. The patch 20 is a difference file that describes how to obtain the new binary image 14 from the old binary image 12. The difference file may reference portions of the old binary image 12 for inclusion in the new binary image 14. It may also include new binary data for inclusion in the new binary image 14, where corresponding data cannot be efficiently referenced from the old binary image 14. In some embodiments, the patch 20 may include a set of copy and insert commands, wherein the copy commands reference portions of the old binary image to be copied into the new binary image, and the insert commands contain new data for insertion into the new binary image.

Updating binary images, and in particular executable software code, using a patch is a well-known technique in the computer programming industry. A variety of binary difference algorithms exist and would be well known to those of ordinary skill in that art.

In some cases, patches are used to update a large block of executable code. For example, the patch may be intended to update the executable code resident on a mobile electronic device, such as a personal digital assistant (PDA). The conventional method of using a patch involves creating a backup copy of the old binary image, generating the new binary image by applying the patch to the old binary image, and then replacing the old binary image with the new binary image. It will be appreciated that this process may require a large amount of memory to implement. For example, if the old binary image is 3 MB, then the backup of this image necessitates a further 3 MB, and the generation of the new image necessitates the availability of about 3 MB. In all, 6 - 7 MB of free memory space may be necessary to facilitate use of the patch. This amount of free memory may not be available on a memory-scarce device, like a PDA.

Another issue that arises with respect to patching a binary image stored in flash memory is the fact that flash memory can only be written in defined blocks or sectors of a predetermined size.

US patent no. 6,775,423 to Kulkarni et al, issued August 10, 2004, describes a binary difference algorithm that attempts to create a patch designed to incrementally update an image stored in flash memory a block at a time. Kulkarni et al. recognizes that portions of the patch may rely upon portions of the old image that are written over as the incremental patching is performed, which results in a cyclic dependency. The Kulkarni patent attempts to address this problem by proposing that portions of the patch be reorganized in order to eliminate cyclic dependencies.

The present application describes novel methods of generating an incremental patch, wherein the incremental patch is a set of patches intended to be applied in sequence to the existing binary image.

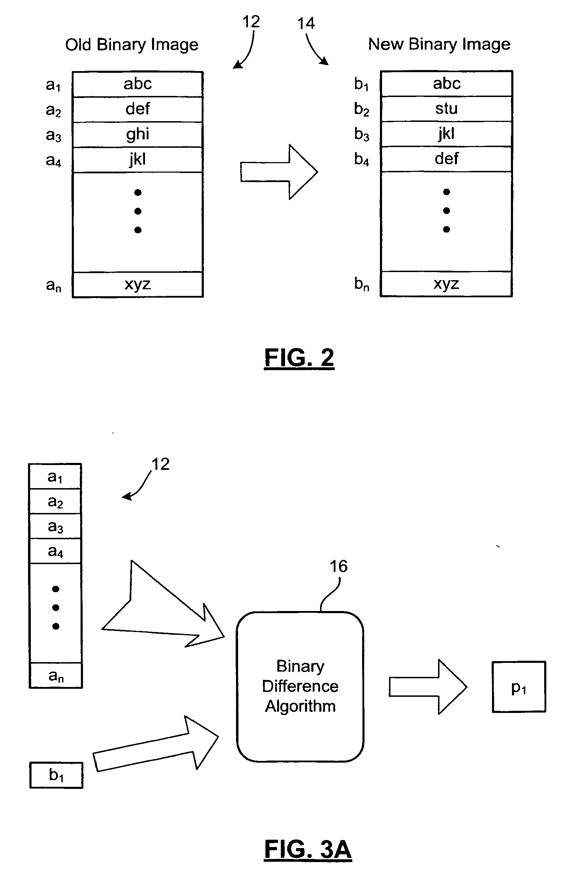

Reference is now made to Figure 2, which diagrammatically shows the old binary image 12 and the new binary image 14. The old binary image 12 is contained in *n* sectors labeled individually a₁ to aₙ. Sector a₁, for example, contains binary data "abc". The new binary image 14 is contained in *n* sectors labeled individually b₁ to bₙ. Sector b₁, for example, also contains binary data "abc".

In this embodiment, the old binary image 12 and the new binary image 14 occupy the same *n* number of sectors; however, in many embodiments the new binary image 14 may occupy more sectors than the old binary image 12. In some embodiments, where the old binary image 12 occupies fewer sectors (*i.e. m* sectors) than the new binary image 14, then the shorter image may be padded with (*n* - *m*) uninitialized sectors so that both images have *n* sectors. Those skilled in the art will appreciate that the padding of the shorter image (with 00's or ff's) will not materially affect the operation of the methods described herein. In cases where the old binary image 12 occupies more sectors than the new binary image 14, the extra sectors will be used as input for the incremental patches but they will not necessarily be patched to form part of the new image. The removal of these extra sectors can be deduced by the patch method once the patching of the new image is finished.

A patch for generating the new binary image 14 from the old binary image 12 may contain references to portions of the old binary image 12 and sections of new data. In other words, the patch may contain copy commands that reference portions of the old binary image 12 and insert commands for inserting new data. As noted above, a patch operation performed on code stored in flash memory may be executed on a sector-by-sector basis. Referring still to Figure 2 as an example, a patch may include a command to create sector b₁ by copying sector a₁ since sector a₁ contains the same data, "abc", as sector b₁. Similarly, the patch may include a command to copy sector a₂ in order to create sector b₄, since it contains data "def". Sector b₂ contains new data that cannot be obtained from the old binary image 12, so the patch may contain an insert command and the data "stu".

The order in which sector-specific patches are applied can raise a problem. This problem will now be illustrated by way of a simplified example. When patching a binary image in flash memory, especially on a device with limited memory capacity, like a mobile electronic device, the patch may be applied by overwriting the memory sectors containing the old binary image 12 with data to create the new binary image 14. Referring to the example shown in Figure 2, when the patch is applied in order to update the old binary image 12 the patch may begin by writing sector b₁ with data "abc" based on the reference to sector a₁. It may then write sector b₂ with the data "stu". Sector b₃ may then be written with the data "jkl" based on a reference to sector a₄. It will be noted that a cyclic dependency problem may be encountered in attempting to patch sector b₄ since it depends on a reference to sector a₂ in order to obtain the data "def". However, the data in sector a₂ was overwritten with the data "stu" in a previous step in the patch operation. Accordingly, the referenced data in the old binary image 12 is no longer available. The patch would therefore need to contain the data "def", which may result in a larger patch.

Reference is now made to Figures 3A - 3D, which illustrate, in block diagram form, the generation of an incremental patch in accordance with an embodiment of the present application. Figure 3A shows the generation of a first patch p₁ using the binary difference algorithm 16. The binary difference algorithm 16 generates the first patch p₁ based upon the old binary image 12 and a first sector b₁ of a new binary image. The first patch p₁ contains the instructions for obtaining b₁ from the old binary image 12. Accordingly, the first patch p₁ may contain copy commands that reference portions of the old binary image 12 and may contain insert commands for inserting new data.

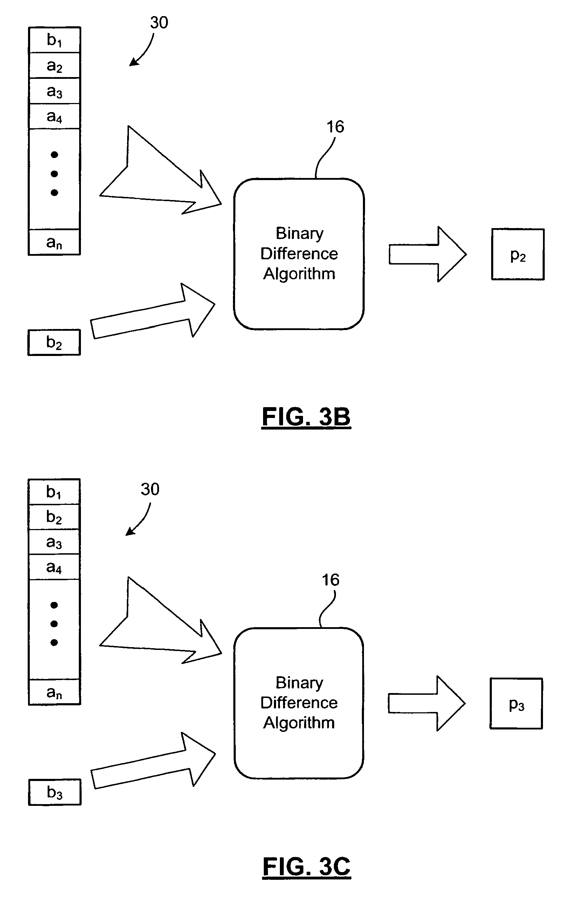

Reference is now made to Figure 3B, which shows the generation of a second patch p₂ using the binary difference algorithm 16. The second patch p₂ is generated based upon a second sector b₂ of the new binary image and a partially patched image 30. The partially patched image 30 is the old binary image 12 with the previously generated patches applied to it, which in this case includes only the first patch p₁. The partially patched image 30 may be referred to as a "current image" or an "intermediate image". The second patch p₂ contains instructions for obtaining the second sector b₂ of the new binary image from the partially patched image 30.

Figure 3C shows the generation of a third patch p₃ using the binary difference algorithm 16. The third patch p₃ contains instructions for obtaining a third sector b₃ of the new binary image from the partially patched image 30. It will be noted that, at this stage, the partially patched image 30 is obtained from the application of the first patch p₁ and the second patch p₂ to the old binary image 12. Accordingly, it contains sectors b₁ and b₂ of the new binary image.

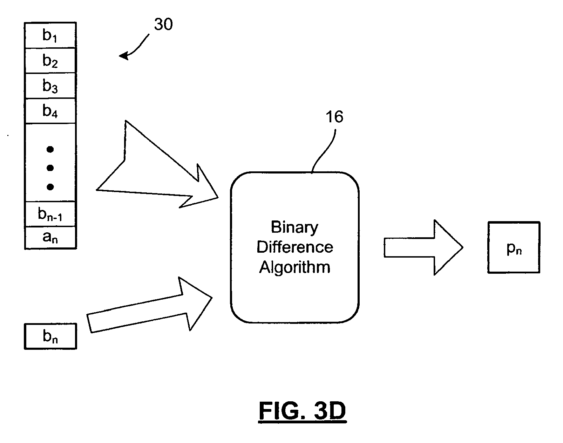

Finally, Figure 3D shows the generation of the final patch pₙ using the binary difference algorithm 16. At this stage the partially patched image 30 includes sectors b₁ to bₙ₋₁ of new binary image data.

The incremental patch comprises the patches p₁ to pₙ. In some cases, the individual sector-based patches p₁ to pₙ may be referred to as "difference files" or "delta files". It will be appreciated that each sector-specific patch in the series of patches relies upon the then-current partially patched image 30 instead of the original old binary image 12.

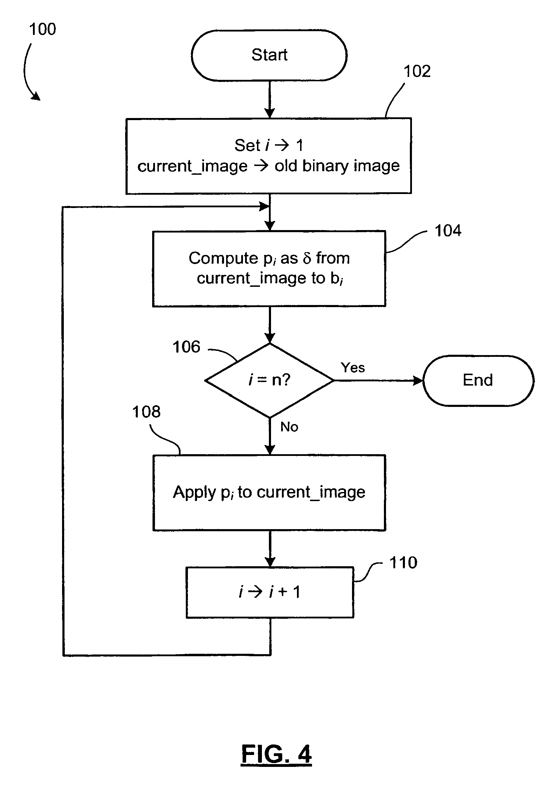

Reference is now made to Figure 4, which shows, in flowchart form, a method 100 for generating an incremental patch for updating an old binary image to a new binary image. The method 100 begins in step 102 by setting an index *i* to 1. The label current_image refers to the state of the image in flash memory, *i.e.* the partially patched image, at any given point in time. When the method 100 begins the image in memory is the old binary image, *i.e*. current_image is the old binary image.

In step 104, a delta file δ is computed from the current_image and sector b*ᵢ* of the new binary image. The delta file δ, or "difference file", is the sector-specific patch p*ᵢ* used to obtain sector b*ᵢ* from the current_image. The delta file δ may be obtained by way of applying a suitable binary difference algorithm. The various binary difference algorithms available will be understood by those of ordinary skill in the art.

In step 106, the index *i* is checked to determine if the last sector b*ₙ* of the new image has been reached. If index *i* equals *n*, then the method 100 ends since the full set of sector-based patches p₁ - pₙ, *i.e.* the full incremental patch, has been computed. Otherwise, the method 100 continues at step 108.

In step 108, the sector-specific patch p*ᵢ* computed in step 104 is applied to the current_image, such that the current_image now reflects the incremental implementation of all patches from p₁ to p*ᵢ*. In one embodiment, the newly created patch p*ᵢ* is used to generate sector b*ᵢ* which is then written to memory over the current_image. This updated current_image will be used in the next iteration of step 104 to generate the next sector-specific patch. The index *i* is then incremented in step 110 and the method 100 returns to step 104 to generate the next delta file δ.

The embodiment described above in connection with Figures 3A-3D and Figure 4 generates the sector-specific patches p*ᵢ* in sequential order beginning with index *i* = 1; however, it will be appreciated that the sector-specific patches p*ᵢ* may be created in a different order in other embodiments. In some cases, the sequential generation of incremental sector-specific patches p*ᵢ* beginning with the first sector and going to the *n*th sector may involve the overwriting of data that would have proven useful in performing sector-specific patches later in the sequence. Accordingly, in one embodiment, the sequence may begin with index *i* = *n* and move in decrements to index *i* = 1. In yet another embodiment, the sector-specific patches p*ᵢ* may be created in any order instead of sequentially.

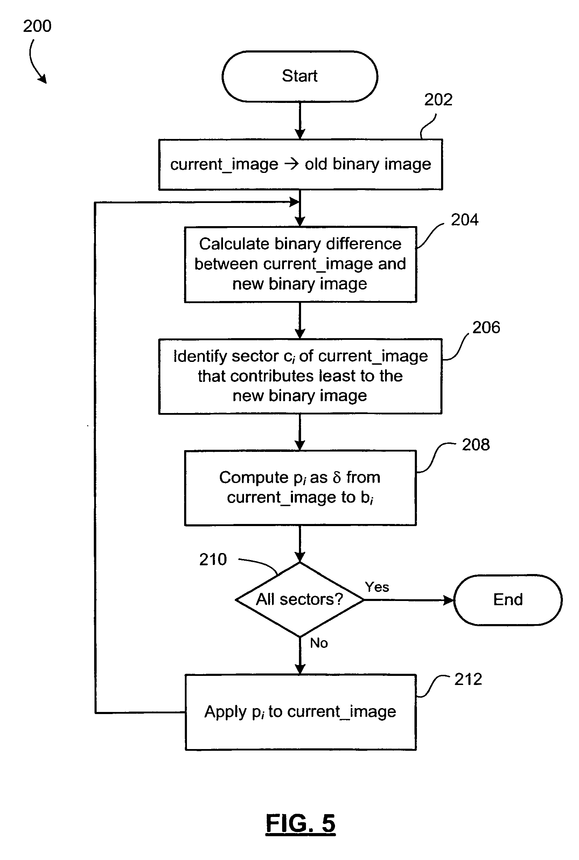

In one embodiment, the sector-specific patches p*ᵢ* may be created in a "least-damage" order. Reference is made to Figure 5, which shows, in flowchart form, another method 200 of generating an incremental patch for updating an old binary image to a new binary image.

The method 200 begins in step 202. The current_image at this stage of the method 200 is the old binary image. At step 204, a binary difference is calculated between the current_image and the new binary image. The binary difference between the two images may be calculated using a binary difference algorithm in a manner that will be understood by those of ordinary skill in the art.

At step 206, the results of step 204 are used to determine which sector c*ᵢ* of the current_image contributes the least to creating the new binary image. For example, in one embodiment, the sector c*ᵢ* of "least damage" may be identified as the sector having the fewest memory locations referenced in the binary difference file generated in step 204. In other words the sector c*ᵢ* contributes the least amount of data to the new binary image. A sector that contains no data that is referenced in the binary difference file is a sector of "least damage" since it may be wholly overwritten without losing any later referencing opportunities in performing an incremental patch. To the extent that some referencing opportunities are to be sacrificed by overwriting a portion of the current_image, step 206 attempts to identify the sector c*ᵢ* whose overwriting will result in the lowest quantity of lost data for referencing opportunities.

As the method 200 moves through iterations, step 204 is reassessed with the current_image, meaning that any sector-specific patches p*ᵢ* generated in previous iterations have been applied, such that those sectors c of the current_image match the corresponding sectors b of new binary image data. In one embodiment, sectors that have been completed in previous iterations may be explicitly excluded from the "least damage" assessment performed in step 206. In another embodiment, the method 200 may not explicitly exclude these completed sectors from the assessment since they will not be identified as "least damage" sectors due to the fact that they perfectly match the corresponding sectors in the new binary image and therefore appear highly relevant in the binary differencing operation of step 204.

It will be appreciated that any permutation of the sectors can be used to produce a series of patches by using the then-current partially patched image at each step. The choice of sector order does not materially affect the operation of the methods described in the present application. It will also be appreciated that in some instances the sector order that produces the minimal overall patch size may be impractical to find because the search belongs to the set of NP-complete problems. This impracticality is further compounded because each permutation requires a time consuming analysis to produce each incremental patch.

In one embodiment, the patch may be generated by way of a method that is the reverse analogue of the method 200 (Fig. 5). In this embodiment, the sector with the highest contribution is used to generate the "last" incremental patch working backwards to generate the "first" incremental patch.

In yet another embodiment, the patch may be generated by way of a method that starts with a random permutation of sectors. In this embodiment, the method makes changes to the permutation, and keeps the changes that make the total size of patches smaller in size. In one embodiment, this method may employ "simulated annealing" techniques. Simulated annealing starts with large changes to the sequence and progresses to smaller changes until no improvement can be found. Those of ordinary skill in the art will be familiar with the concept of "simulated annealing" for locating good approximations to a global optimum of a given function in a large search space.

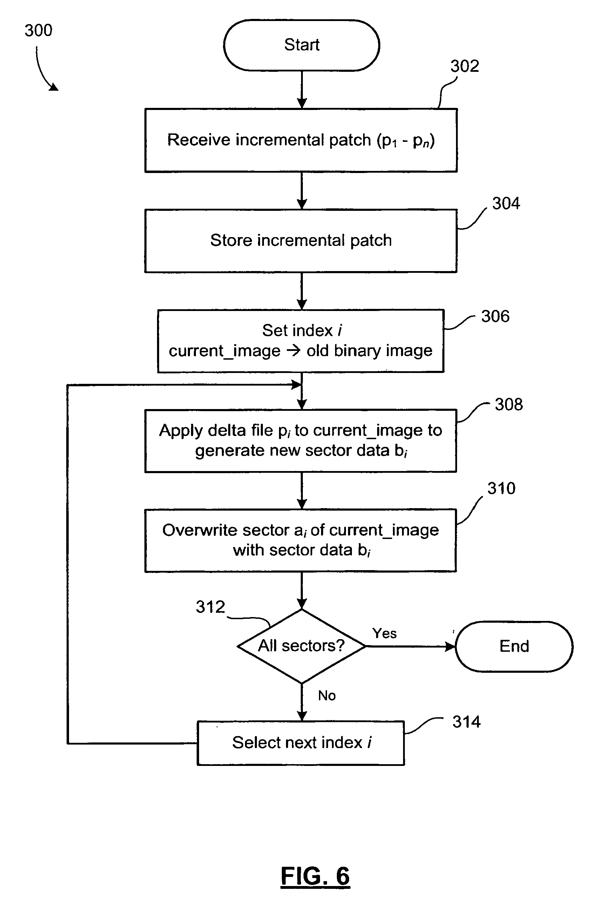

Reference is now made to Figure 6, which shows, in flowchart form, a method 300 of incrementally patching a binary image. The method 300 may be implemented by way of computer program code executable on a processing device. In at least one embodiment, the method 300 is implemented within a mobile electronic device having a flash memory.

The method 300 begins in step 302 with receipt of the incremental patch. In an embodiment involving a mobile electronic device, the incremental patch may be received via wireless communication from a wireless network. In other embodiments, it may be received through a wired connection from a remote source.

The incremental patch is stored in temporary memory in step 304. In one embodiment, the incremental patch may be stored in RAM memory resident on the mobile electronic device.

In step 306, the index *i* is set to a starting value. The starting value may be specified by the incremental patch. In an embodiment where the patch is intended to be applied sequentially beginning with the first sector of the image and proceeding to the *n*th sector, the index *i* may initially be set to 1. However, as noted above, the patch may be intended to be applied to sectors in other orders. The incremental patch may specify an indexing pattern that indicates the order in which the sectors are to be updated using the patch. Accordingly, the indexing pattern may indicate the starting value for the index *i*.

The label current_image refers to the state of the binary image, e.g. in flash memory, that is being updated by way of the incremental patch. The current_image may also be referred to as the partially patched image. In step 306, the current_image is the old binary image.

In step 308, delta file p*ᵢ* from the incremental patch, together with the current_image, is used to generate the data for sector b*ᵢ*. In step 310, the data for sector b*ᵢ* is written over the old data of sector a*ᵢ*. At step 312, the device assesses whether all sectors of the new binary image have been completed and, if so, then the method 300 ends. Otherwise, the method continues in step 314.

In step 314, the next index *i* is selected. As noted above, the selection of the next index *i* may be made in accordance with an indexing pattern specified in the incremental patch. The method 300 then returns to step 308 to repeat steps 308 and 310 with the next index *i*.

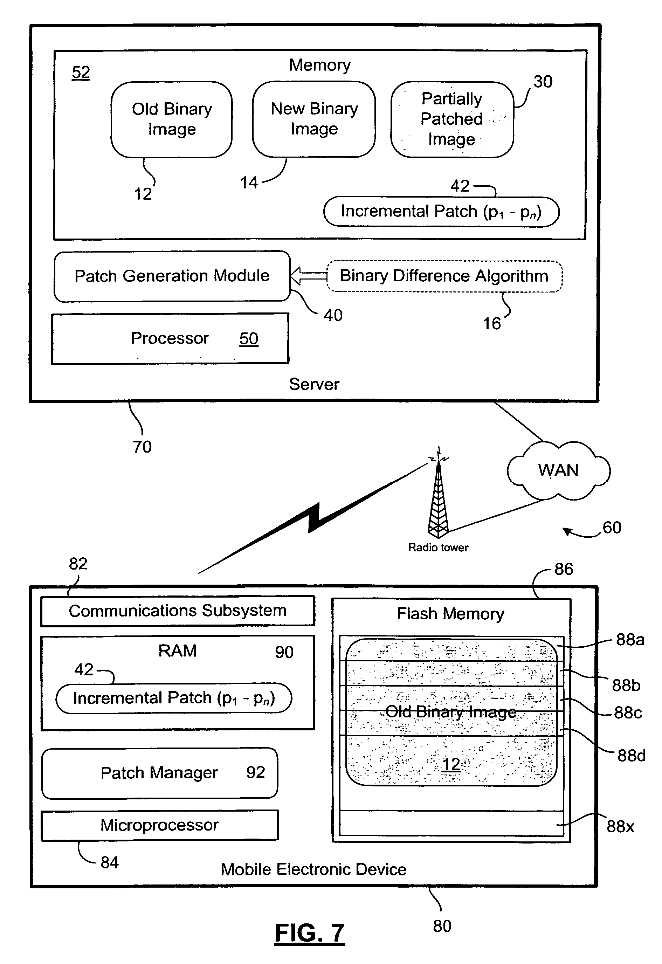

Reference is now made to Figure 7, which shows, in block diagram form, a host 70 and a mobile electronic device 80 for generating and applying an incremental patch 42.

The host 70 may include a processor 50 and memory 52. The host 70 may, in some embodiments, include a server or gateway or other remote computing device. The memory 52 may store a copy of the old binary image 12 and the new binary image 14. The host 70 includes a patch generation module 40 for generating the incremental patch 42, wherein the incremental patch 42 includes sector-specific delta files p₁ to pₙ. The patch generation module 40 includes software components for implementing an embodiment of the patch generation method 200 described above in connection with Figure 5. The patch generation module 40 and its components employ the binary difference algorithm 16 in the course of generating the delta files, as described above. The memory 52 may further store the partially patched image 30 used by the patch generation module 40 in the course of generating the incremental patch 42.

The host 70 may include a number of other components, both of software and hardware, including an operating system and user interface, as will be appreciated by persons of ordinary skill in the art.

The mobile electronic device 80 may include a microprocessor 84, flash memory 86, RAM 90, and a communications subsystem 82. The communications subsystem 82, operating under program control executed by the microprocessor 84, may provide the device 80 with wireless connectivity using known wireless protocols. The communications subsystem 82 may allow the device 80 to communicate with servers and other devices over a wireless network 60. In some embodiments, the host 70 may transmit or forward files, such as the incremental patch 42 to the device 80 via the wireless network 60. The wireless network 60 may include a plurality of wireless transceivers networked through a wide area network, and may include connections with a plurality of other networks, both public and private, including the Internet.

The mobile electronic device 80 further includes a patch manager 92. The patch manager 92 includes computer-readable code executable by the microprocessor 84 for updating a binary image using the incremental patch 42. The patch manager 92 may, in some embodiments, be provided as a part of the incremental patch 42, although for ease of illustration it is shown as being separate in Figure 7. The patch manager 92 may be received by the device 80 from the host 70 via the wireless network 60. In another embodiment, the patch manager 92 may be a resident module on the device 80. In some embodiments, the patch manager 92 may be implemented as a part of the device operating system (not shown). In any case, the patch manager 92 implements the commands of the incremental patch 42 for updating the binary image stored in flash memory 86.

The flash memory 86 is divided into sectors 88 (labeled individually 88a to 88x), wherein the sectors 88 are writeable blocks of memory. The old binary image 12 is stored in a range of the sectors 88 in flash memory 86. In accordance with the method 300 described in connection with Figure 6, the patch manager 92 employs the incremental patch 42 to incrementally generate the data for the new binary image 14 (Fig. 2) and overwrite the old binary image data on a sector-by-sector basis, relying in each iteration upon the then-prevailing partially patched image in flash memory 86 as the basis for generating the next sector of new binary image data.

The present application describes various software components, modules, object, programs or other machine-readable code elements, and the execution of those software components by a suitable processor. The programming of such software components will be within the understanding of a person of ordinary skill in the art having regard to the detailed description herein.

Certain adaptations and modifications of the described embodiments can be made. Therefore, the above discussed embodiments are considered to be illustrative and not restrictive.

## Claims

1. A method of generating an incremental patch (20) for updating an old binary image (12) to a new binary image (14), the new binary image (14) being divided into a plurality of sectors, wherein each sector is a writeable block of memory of a predefined size, wherein the method comprises the steps of:
initially establishing a current image (30) as the old binary image (12);
selecting one of the plurality of sectors of the new binary image;
computing a binary difference algorithm to generate a delta file (pᵢ) for obtaining data for said one of the plurality of sectors from the current image (30), the delta file being generated based upon the whole of the current binary image and the selected sector of the new binary image;
applying the delta file (pᵢ) to the current image (30) to create a new current image (30); and
repeating the steps of selecting, computing and applying for each of the plurality of sectors,
wherein the incremental patch (20) comprises a plurality of delta files (p₁-pₙ) created from the computing steps,
wherein selecting comprises calculating a binary difference between the current image and the new binary image, and
wherein said one of the plurality of sectors corresponds to a sector of the current image having the fewest memory locations referenced in the calculated binary difference.

2. The method claimed in claim 1 in which the delta file references portions of the current binary image for inclusion in the selected sector of the new binary image.

3. The method claimed in claim 2 in which the delta file includes a set of copy and insert commands, wherein the copy commands reference portions of the current binary image to be copied into the selected sector of the new binary image.

4. The method claimed in any preceding claim, wherein said step of selecting further comprises identifying said sector of the current image having the fewest memory locations referenced in the calculated binary difference.

5. The method claimed in any preceding claim, wherein said step of applying comprises overwriting said sector of the current image (30) with new binary image data (14) from said one of the plurality of sectors.

6. The method claimed in any preceding claim, wherein the method further comprises a step of aggregating said plurality of delta files to form the incremental patch.

7. The method claimed in any preceding claim, wherein the method further comprises a step of transmitting the incremental patch to a mobile electronic device (80) through a wireless network (60).

8. A system (70) for generating an incremental patch (20) for updating an old binary image (12) to a new binary image (14), the new binary image (14) being divided into a plurality of sectors, wherein each sector is a writeable block of memory of a predefined size, the system (70) comprising:
memory (52) for storing the new binary image (14) and the old binary image (12), and for storing a current image (30), wherein said current image (30) is initially established as the old binary image (12);
a processor (50);
a patch generation module (40) executable by the processor (50) for generating the incremental patch (20), the patch generation module (40) comprising a component for selecting one of the plurality of sectors of the new binary image, computing a binary difference algorithm to generate a delta file (pᵢ) for obtaining data for said one of the plurality of sectors from the current image (30), the delta file being generated based upon the whole of the current binary image and the selected sector of the new binary image, and a component for applying the delta file (pᵢ) to the current image (30) to create a new current image (30), and wherein said patch generation module (40) comprises a loop component for invoking said components for selecting, computing and applying for each of the plurality of sectors,
wherein the incremental patch (20) comprises a plurality of the delta files (p₁-pₙ) created by said component for computing under control of said loop component, and
wherein the component for selecting comprises a component for calculating a binary difference between the current image and
the new binary image, and wherein said one of the plurality of sectors corresponds to a sector of the current image having the fewest memory locations referenced in the calculated binary difference.

9. The system claimed in claim 8, wherein said component for selecting comprises a component for identifying a sector of the current image (30) having the fewest memory locations referenced in the calculated binary difference.

10. The system claimed in any one of claims 8 to 9, wherein said component for applying comprises a component for overwriting said sector of the current image (30) with new binary image data from said one of the plurality of sectors.

11. The system claimed in any one of claims 8 to 10, wherein the sectors comprise blocks of flash memory.

12. The system claimed in any one of claims 8 to 11, wherein the system further comprises a component for aggregating said plurality of delta files to form the incremental patch.

13. The system claimed in any one of claims 8 to 12, wherein the system further comprises a wireless network (60) for transmitting the incremental patch to a mobile electronic device (80).

14. A machine-readable medium executable upon the processor (50) of the system (70) claimed in any one of claims 8 to 13, for implementing the method of any one of claims 1 to 7.

## Patentansprüche

1. Ein Verfahren zum Erzeugen eines inkrementellen Patches (20) zum Aktualisieren eines alten binären Bilds (12) in ein neues binäres Bild (14), wobei das neue binäre Bild (14) in eine Vielzahl von Sektoren unterteilt wird, wobei jeder Sektor ein schreibbarer Block von Speicher einer vordefinierten Größe ist, wobei das Verfahren die Schritte aufweist:
anfänglich Festsetzen eines aktuellen Bilds (30) als das alte binäre Bild (12);
Auswählen eines der Vielzahl von Sektoren des neuen binären Bilds;
Berechnen eines binären Differenz-Algorithmus, um eine Delta-Datei (pᵢ) zum Erlangen von Daten für den einen der Vielzahl von Sektoren aus dem aktuellen Bild (30) zu erzeugen, wobei die Delta-Datei basierend auf dem Gesamten des aktuellen binären Bilds und dem ausgewählten Sektor des neuen binären Bilds erzeugt wird;
Anwenden der Delta-Datei (pᵢ) auf das aktuelle Bild (30), um ein neues aktuelles Bild (30) zu erzeugen; und
Wiederholen der Schritte des Auswählens, Berechnens und Anwendens für jeden der Vielzahl von Sektoren,
wobei der inkrementelle Patch (20) eine Vielzahl von Delta-Dateien (p₁-pₙ) aufweist, die in den Berechnungsschritten erzeugt werden,
wobei ein Auswählen aufweist ein Berechnen einer binären Differenz zwischen dem aktuellen Bild und dem neuen binären Bild, und
wobei der eine der Vielzahl von Sektoren einem Sektor des aktuellen Bilds entspricht, der die wenigsten Speicherstellen referenziert in der berechneten binären Differenz hat.

2. Das Verfahren gemäß Anspruch 1, wobei die Delta-Datei Teile des aktuellen binären Bilds zur Aufnahme in den ausgewählten Sektor des neuen binären Bilds referenziert.

3. Das Verfahren gemäß Anspruch 2, wobei die Delta-Datei einen Satz von Kopieren- und Einfügen-Befehlen umfasst, wobei die Kopieren-Befehle Teile des aktuellen binären Bilds zum Kopieren in den ausgewählten Sektor des neuen binären Bilds referenzieren.

4. Das Verfahren gemäß einem vorhergehenden Anspruch, wobei der Schritt des Auswählens weiter ein Identifizieren des Sektors des aktuellen Bilds aufweist, der die wenigsten Speicherstellen referenziert in der berechneten binären Differenz hat.

5. Das Verfahren gemäß einem vorhergehenden Anspruch, wobei der Schritt des Anwendens aufweist ein Überschreiben des Sektors des aktuellen Bilds (30) mit neuen binären Bilddaten (14) von dem einen der Vielzahl von Sektoren.

6. Das Verfahren gemäß einem vorhergehenden Anspruch, wobei das Verfahren weiter aufweist einen Schritt eines Aggregierens der Vielzahl von Delta-Dateien, um den inkrementellen Patch zu bilden.

7. Das Verfahren gemäß einem vorhergehenden Anspruch, wobei das Verfahren weiter aufweist einen Schritt eines Übertragens des inkrementellen Patches an eine mobile elektronische Vorrichtung (80) durch ein drahtloses Netzwerk (60).

8. Ein System (70) zum Erzeugen eines inkrementellen Patches (20) zum Aktualisieren eines alten binären Bilds (12) in ein neues binäres Bild (14), wobei das neue binäre Bild (14) in eine Vielzahl von Sektoren unterteilt wird, wobei jeder Sektor ein schreibbarer Block von Speicher einer vordefinierten Größe ist, wobei das System (70) aufweist:
einen Speicher (52) zum Speichern des neuen binären Bilds (14) und des alten binären Bilds (12) und zum Speichern eines aktuellen Bilds (30),
wobei das aktuelle Bild (30) anfänglich als das alte binäre Bild (12) festgesetzt wird;
einen Prozessor (50);
ein Patch-Erzeugungs-Modul (40), das durch den Prozessor (50) ausführbar ist zum Erzeugen des inkrementellen Patches (20), wobei das Patch-Erzeugungs-Modul (40) eine Komponente aufweist zum Auswählen eines der Vielzahl von Sektoren des neuen binären Bilds, Berechnen eines binären Differenz-Algorithmus, um eine Delta-Datei (pᵢ) zum Erlangen von Daten für den einen der Vielzahl von Sektoren aus dem aktuellen Bild (30) zu erzeugen, wobei die Delta-Datei basierend auf dem Gesamten des aktuellen binären Bilds und dem ausgewählten Sektor des neuen binären Bilds erzeugt wird, und eine Komponente zum Anwenden der Delta-Datei (pᵢ) auf das aktuelle Bild (30), um ein neues aktuelles Bild (30) zu erzeugen, und wobei das Patch-Erzeugungs-Modul (40) eine Schleife-Komponente aufweist zum Aufrufen der Komponenten zum Auswählen, Berechnen und Anwenden für jeden der Vielzahl von Sektoren,
wobei der inkrementelle Patch (20) eine Vielzahl der Delta-Dateien (p₁-pₙ) aufweist, die von der Komponente zum Berechnen unter Steuerung der Schleife-Komponente erzeugt werden, und
wobei die Komponente zum Auswählen aufweist eine Komponente zum Berechnen einer binären Differenz zwischen dem aktuellen Bild und dem neuen binären Bild, und wobei der eine der Vielzahl von Sektoren einem Sektor des aktuellen Bilds entspricht, der die wenigsten Speicherstellen referenziert in der berechneten binären Differenz hat.

9. Das System gemäß Anspruch 8, wobei die Komponente zum Auswählen aufweist eine Komponente zum Identifizieren eines Sektors des aktuellen Bilds (30), der die wenigsten Speicherstellen referenziert in der berechneten binären Differenz hat.

10. Das System gemäß einem der Ansprüche 8 bis 9, wobei die Komponente zum Anwenden aufweist eine Komponente zum Überschreiben des Sektors des aktuellen Bilds (30) mit neuen binären Bilddaten von dem einen der Vielzahl von Sektoren.

11. Das System gemäß einem der Ansprüche 8 bis 10, wobei die Sektoren Blöcke von Flash-Speicher aufweisen.

12. Das System gemäß einem der Ansprüche 8 bis 11, wobei das System weiter aufweist eine Komponente zum Aggregieren der Vielzahl von Delta-Dateien, um den inkrementellen Patch zu bilden.

13. Das System gemäß einem der Ansprüche 8 bis 12, wobei das System weiter aufweist ein drahtloses Netzwerk (60) zum Übertragen des inkrementellen Patches an eine mobile elektronische Vorrichtung (80).

14. Ein maschinenlesbares Medium, das auf dem Prozessor (50) des Systems (70) gemäß einem der Ansprüche 8 bis 13 ausführbar ist, um das Verfahren gemäß einem der Ansprüche 1 bis 7 zu implementieren.

## Revendications

1. Procédé de génération d'un correcteur graduel (20) pour mettre à jour une ancienne image binaire (12) en une nouvelle image binaire (14), la nouvelle image binaire (14) étant divisée en une pluralité de secteurs, où chaque secteur est un bloc de mémoire inscriptible d'une taille prédéfinie, le procédé comprenant les étapes consistant :
à établir initialement une image actuelle (30) selon l'ancienne image binaire (12) ;
à sélectionner l'un de la pluralité de secteurs de la nouvelle image binaire ;
à calculer un algorithme de différence binaire pour générer un fichier delta (Pᵢ) afin d'obtenir des données pour ledit secteur de la pluralité de secteurs à partir de l'image actuelle (30), le fichier delta étant généré sur la base de l'ensemble de l'image binaire actuelle et du secteur sélectionné de la nouvelle image binaire ;
à appliquer le fichier delta (pᵢ) à l'image actuelle (30) afin de créer une nouvelle image actuelle (30) ; et
à répéter les étapes de sélection, de calcul et d'application pour chacun de la pluralité de secteurs,
où le correcteur graduel (20) comprend une pluralité de fichiers delta (P₁-Pₙ) créés à partir des étapes de calcul,
où la sélection comprend le calcul d'une différence binaire entre l'image actuelle et la nouvelle image binaire, et
où ledit secteur de la pluralité de secteurs correspond à un secteur de l'image actuelle ayant le moins d'emplacements de mémoire référencés dans la différence binaire calculée.

2. Procédé tel que revendiqué dans la revendication 1, dans lequel le fichier delta référence des parties de l'image binaire actuelle pour inclusion dans le secteur sélectionné de la nouvelle image binaire.

3. Procédé revendiqué dans la revendication 2, dans lequel le fichier delta comporte un ensemble de commandes de copie et d'insertion, où les commandes de copie référencent des parties de l'image binaire actuelle à copier dans le secteur sélectionné de la nouvelle image binaire.

4. Procédé revendiqué dans l'une des revendications précédentes, dans lequel ladite étape de sélection comprend en outre l'identification dudit secteur de l'image actuelle ayant le moins d'emplacements de mémoire référencés dans la différence binaire calculée.

5. Procédé revendiqué dans l'une des revendications précédentes, dans lequel ladite étape d'application comprend la réécriture dudit secteur de l'image actuelle (30) avec de nouvelles données d'image binaire (14) à partir dudit secteur de la pluralité de secteurs.

6. Procédé revendiqué dans l'une des revendications précédentes, dans lequel le procédé comprend en outre une étape consistant à agréger ladite pluralité de fichiers delta afin de former le correcteur graduel.

7. Procédé revendiqué dans l'une des revendications précédentes, dans lequel le procédé comprend en outre une étape consistant à transmettre le correcteur graduel à un dispositif électronique mobile (80) au moyen d'un réseau sans fil (60).

8. Système (70) destiné à générer un correcteur graduel (20) pour mettre à jour une ancienne image binaire (12) à une nouvelle image binaire (14), la nouvelle image binaire (14) étant divisée en une pluralité de secteurs, où chaque secteur est un bloc de mémoire inscriptible d'une taille prédéfinie, le système (70) comprenant :
une mémoire (52) pour stocker la nouvelle image binaire (14) et l'ancienne image binaire (12), et pour stocker une image actuelle (30),
où ladite image actuelle (30) est initialement établie en tant qu'ancienne image binaire (12) ;
un processeur (50) ;
un module de génération de correcteur (40) exécutable par le processeur (50) pour générer le correcteur graduel (20), le module de génération de correcteur (40) comprenant un composant destiné à sélectionner un secteur de la pluralité de secteurs de la nouvelle image binaire, à calculer un algorithme de différence binaire pour générer un fichier delta (Pᵢ) afin d'obtenir des données pour ledit secteur de la pluralité de secteurs à partir de l'image actuelle (30), le fichier delta étant généré sur la base de l'ensemble de l'image binaire actuelle et du secteur sélectionné de la nouvelle image binaire, et un composant destiné à appliquer le fichier delta de l'image actuelle (30) afin de créer une nouvelle image actuelle (30), et où ledit module de génération de correcteur (40) comprend un composant en boucle pour invoquer lesdits composants de sélection, de calcul et d'application pour chacun de la pluralité de secteurs,
où le correcteur graduel (20) comprend une pluralité des fichiers delta (p₁-pₙ) créés par ledit composant pour le calcul sous la commande dudit composant en boucle, et
où le composant de sélection comprend un composant de calcul d'une différence binaire entre l'image actuelle et la nouvelle image binaire, et où ledit secteur de la pluralité de secteurs correspond à un secteur de l'image actuelle ayant le moins d'emplacements de mémoire référencés dans la différence binaire calculée.

9. Système revendiqué dans la revendication 8, dans lequel ledit composant de sélection comprend un élément d'identification d'un secteur de l'image actuelle (30) ayant le moins d'emplacements de mémoire référencés dans la différence binaire calculée.

10. Système revendiqué dans l'une quelconque des revendications 8 à 9, dans lequel ledit composant d'application comprend un composant de réécriture dudit secteur de l'image actuelle (30) avec de nouvelles données d'image binaires à partir dudit secteur de la pluralité de secteurs.

11. Système revendiqué dans l'une quelconque des revendications 8 à 10, dans lequel les secteurs comprennent des blocs de mémoire flash.

12. Système revendiqué dans l'une quelconque des revendications 8 à 11, dans lequel le système comprend en outre un composant pour agréger ladite pluralité de fichiers delta afin de former le correcteur graduel.

13. Système revendiqué dans l'une quelconque des revendications 8 à 12, dans lequel le système comprend en outre un réseau sans fil (60) pour transmettre le correcteur graduel à un dispositif électronique mobile (80).

14. Support lisible par machine exécutable sur le processeur (50) du système (70) revendiqué dans l'une quelconque des revendications 8 à 13, pour la mise en oeuvre du procédé de l'une quelconque des revendications 1 à 7.
